# EUROPEAN PATENT SPECIFICATION

(11) **EP 0 457 542 B1**
(45) Date of publication and mention of the grant of the patent: **17.09.1997**
(21) Application number: 91304299.0
(22) Date of filing: 14.05.1991
(51) Int. Cl.: H04L 27/22, H03J 7/00

(54) **Transceiver with Doppler correction**
Sender-Empfänger mit Korrektur des Dopplereffektes
Emetteur-récepteur à correction d'effet Doppler

(30) Priority: 17.05.1990 JP 127585/90
(43) Date of publication of application: 21.11.1991
(73) Proprietor: SONY CORPORATION, Tokyo 141 (JP)
(72) Inventor: Suzuki, Mitsuhiro, Shinagawa-ku Tokyo 141 (JP); Kunihiro, Takushi, Shinagawa-ku Tokyo 141 (JP)
(74) Representative: Turner, James Arthur

(56) References cited:
- EP-A- 0 355 587
- EP-A- 0 412 207
- WO-A-91/05410
- US-A- 4 489 413

## Description

This invention relates to apparatus for and methods of transmitting a signal responsive to a received signal.

One known type of digital cellular communication system is a time division multiple access (TDMA) system in which a base station and a mobile station communicate via radio waves. In a TDMA system, six receiving slots, for example, are provided for every channel of the 900 MHz band, and in each mobile station an incoming signal in one of the six slots is received for a period of 20 milliseconds at intervals of 120 milliseconds. Six transmission slots are similarly provided for every channel, and in each mobile station an outgoing signal in one of the six transmission slots is similarly transmitted. A reference receiving carrier frequency and a reference transmitting carrier frequency in a single mobile station are different from each other. By way of example, a frequency 45 MHz lower than the reference receiving carrier frequency is employed as the reference transmitting carrier frequency.

When the mobile station moves, an offset frequency occurs in the actual received carrier frequency due to the Doppler effect. Also, if the oscillation frequency of a reference oscillator in the base station, which uses a quartz crystal, is not correct, then another offset frequency will occur. In the mobile station, the offset frequency of the transmitted carrier frequency must be maintained within a band ±200 Hz from the reference transmitting carrier frequency.

For this reason, it has been proposed that the mobile station be provided with a phase locked loop (PLL) which is locked to the carrier frequency of the received signal thereby to produce the transmitting carrier signal. However, since the received signal is a burst signal which is received for 20 milliseconds at intervals of 120 milliseconds, it is very difficult to lock the PLL to the carrier frequency of the received signal, as the lock frequency must be determined during a short period of time (20 milliseconds) and maintained for a period of 100 milliseconds between received signals, and the transmission offset frequency must be maintained within the band ±200 Hz from the reference transmitting carrier frequency.

US-A-4 489 413 discloses a transmitting and receiving apparatus for transmitting a signal at a transmitted carrier frequency and receiving a signal at a received carrier frequency,

According to the present invention there is provided a transmitting and receiving apparatus for receiving a signal of an actual received carrier frequency and transmitting a signal of an actual transmitted carrier frequency, the apparatus comprising:
receiving means for receiving a broadcast signal;
the apparatus being characterised by:
reference frequency means for providing a reference receiving carrier frequency and a reference transmitting carrier frequency which are different from each other;
reception offset frequency detecting means for detecting an offset frequency which is the difference between the actual received carrier frequency of the received signal and the reference receiving carrier frequency;
transmission signal generating means for generating a first transmission signal having the reference transmitting carrier frequency;
multiplying means for multiplying the first transmission signal by the detected offset frequency to generate a second transmission signal with the actual transmitted carrier frequency; and transmitting means for transmitting the second transmission signal.

According to the present invention there is also provided a method of transmitting a signal of an actual transmitted carrier frequency which follows the actual received carrier frequency of a received signal, the method comprising:
receiving a broadcast signal;
the method being characterised by:
providing a reference receiving carrier frequency and a reference transmitting carrier frequency which are different from each other;
detecting an offset frequency which is the difference between the actual received carrier frequency of the received signal and the reference receiving carrier frequency;
generating a first transmission signal having the reference transmitting carrier frequency;
multiplying the first transmission signal by the detected offset frequency to generate a second transmission signal with the actual transmitted carrier frequency; and
transmitting the second transmission signal.

Thus embodiments of the present invention can provide a communication system in which an outgoing signal has a transmission offset frequency which follows a reception offset frequency, so that the actual transmitted carrier frequency of the outgoing signal follows the actual received carrier frequency of the received signal and can be transmitted with satisfactory responsiveness and ease.

According to an aspect of the present invention, a transmitting and receiving apparatus for transmitting and receiving signals with a reference receiving carrier frequency which differs from a reference transmitting carrier frequency comprises a reception offset frequency detecting circuit for detecting an offset frequency of a present carrier frequency of a received signal relative to the reference receiving carrier frequency, a multiplier for multiplying a transmission signal of the reference transmitting carrier frequency with a frequency signal of a detected offset frequency, and a transmitting circuit for transmitting an output signal of the multiplier as the signal of a present transmitted carrier frequency.

The invention will now be described by way of example with reference to the accompanying drawings, throughout which like parts are referred to by like references, and in which:
Figure 1 is a block diagram of an embodiment of transmitting and receiving apparatus according to the present invention;
Figure 2 is a block diagram showing a modulating circuit used in the embodiment; and
Figures 3I to 3III are diagrams showing the encoding operation of the modulating circuit of Figure 2.

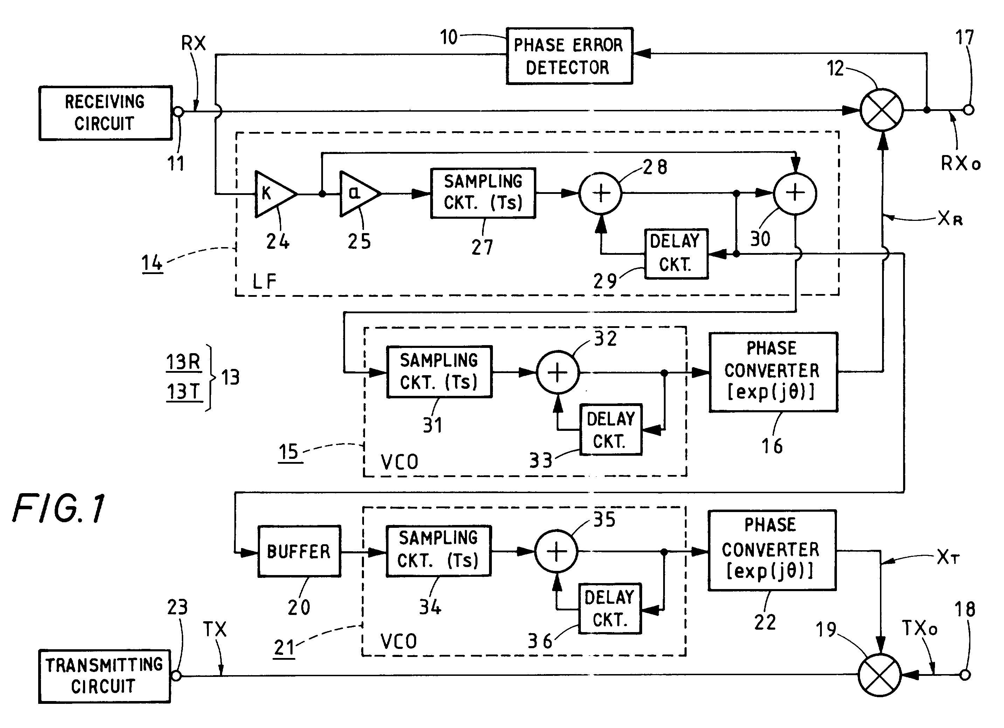

Figure 1 shows an embodiment of transmitting and receiving system applied to a TDMA digital communication system in which the base station and the mobile station communicate via radio waves. Six receiving slots, for example, are provided for every channel of the 900 MHz band, and a mobile station receives an incoming signal in one slot thereof at intervals of 120 milliseconds for a period of 20 milliseconds. Six transmission slots are similarly provided for every channel, and a mobile station transmits an outgoing signal in one slot thereof with a similar time and interval. The reference receiving carrier frequency and the reference transmitting carrier frequency in any given mobile station are different from each other.

Figure 1 shows how the signal processing occurs with a digital signal processor in a mobile station, such as a mobile telephone. A signal RX received by a receiving circuit 11 is supplied through a multiplier 12 to a phase error detector 10. The phase error detector 10 produces only the imaginary part of the signal supplied thereto. The output of the phase error detector 10 is supplied to a loop filter (LF) 14 of a phase locked loop (PLL) 13.

The PLL 13 comprises a PLL 13R and a PLL 13T. The PLL 13R comprises the loop filter 14, a voltage controlled oscillator (VCO) 15 and a phase converter [exp(j θ] 16. The PLL 13T similarly comprises the loop filter 14, a VCO 21 and a phase converter [exp(j θ] 22. The phase converters 16 and 22 generate complex sine waves corresponding to the signals supplied thereto.

The loop filter 14 comprises a multiplier 24 for multiplying the received signal by a coefficient K, a multiplier 25 for multiplying an output of the multiplier 24 by a coefficient a (where a=K/2), a sampling circuit 27 for sampling the output of the multiplier 25 at a sampling interval Ts, an adder 28 which adds the output of the sampling circuit 27 and the output of a delay circuit 29, an adder 30 for adding the outputs of the multiplier 24 and the adder 28, and the delay circuit 29, which delays the output of the adder 28 by one sampling interval Ts and supplies the resulting delayed signal back to the adder 28. The sampling circuit 27, the adder 28 and the delay circuit 29 form an integrator.

The VCO 15 comprises a sampling circuit 31 for sampling the output of the loop filter 14, that is, the output of the adder 30, again at a sampling interval Ts, an adder 32 for adding the output of the sampling circuit 31 and the output of a delay circuit 33, and the delay circuit 31, which again delays the output of the adder 32 by one sampling interval Ts and supplies the resulting delayed signal back to the adder 32. Thus, the VCO 15 also forms an integrator.

The output of the VCO 15, that is, the output of the adder 32, is then supplied to the phase converter 16, in which the phase thereof is determined. The output of the phase converter 16 is supplied to the multiplier 12.

The VCO 21 is supplied with a signal from the loop filter 14, that is, the output of the adder 28, through a buffer 20, and comprises a sampling circuit 34, again having a sampling interval Ts, an adder 35 for adding the output of the sampling circuit 34 and the output of a delay circuit 36, and the delay circuit 36 which again delays the output of the adder 35 by one sampling interval Ts and supplies the resulting delayed signal back to the adder 35, thus again forming an integrator.

The VCO 21 may alternatively be supplied with the output of the loop filter 14, that is, the output of the adder 30, through the buffer 20.

The output of the VCO 21, that is, the output of the adder 35, is then supplied to the phase converter 22, in which the phase thereof is determined, and the output of the phase converter 22 is fed to a multiplier 19.

Assuming that FR represents the actual received carrier frequency of the received signal RX detected by the receiving circuit 11 (that is, the signal received by the mobile station from the signal transmitted from the base station). then the actual received carrier frequency FR is expressed as:${\text{FR = RF}}_{\text{o}} \text{± ΔF}$ where RFₒ is the reference receiving carrier frequency and Δ F is the offset frequency.

The signal RX obtained from the receiving circuit 11 is supplied through the multiplier 12 and the phase error detector 10 to the loop filter 14, in which an angular frequency ω of the offset frequency Δ F is detected, and this detected angular frequency ω is supplied to the VCO 15, in which the angle θ is detected. The angle θ is then supplied to the phase converter 16, which then generates a frequency signal x_{R} of the offset frequency Δ F, and this frequency signal x_{R} is supplied to the multiplier 12, where it is multiplied with the received signal RX, so that a received signal RXₒ, having the reference receiving carrier frequency FRₒ, is obtained at the output terminal 17. This received signal RXₒ is supplied to, and demodulated by, a demodulator (not shown) to provide an audio signal.

Another angular frequency ω' (the output of the adder 28) of an offset frequency Δ F' detected by the integrator formed of the elements 27, 28 and 29 within the loop filter 14 is supplied to the VCO 21, and an angle θ' is detected. This detected angle θ' is supplied to the phase converter 22 which generates a frequency signal x_{T} of the offset frequency Δ F'. This frequency x_{T} is supplied to multiplier 19, where it is multiplied with a transmission signal TXₒ, supplied from a terminal 18 and having a reference transmission carrier frequency FTₒ, to provide a transmission signal TX having an actual transmission carrier frequency FT. This transmission signal TX is transmitted to the base station from a transmitter 23.

Assuming that Ft represents the actual transmitted carrier frequency of the transmission signal TX, then FT is expressed as:${\text{FT = FT}}_{\text{o}} \text{∓ ΔF'}$ where FTₒ is the reference transmitting carrier frequency.

The angular frequency ω supplied to the VCO 15 must follow the received signal and must thus be the output of the adder 30. However, the angular frequency ω' supplied to the VCO 21 need not follow the received signal so that the signal-to-noise (S/N) ratio can be improved by utilizing the output of the adder 28, which has the low noise of the received signal, before additional noise is added by the adder 30. The difference between the angular frequencies ω and ω' is negligible in comparison with the difference between the transmission and reception frequencies.

With this communication system, when the reference receiving carrier frequency FRₒ and the reference transmitting carrier frequency FTₒ are different, the offset frequency ΔF' of the actual received carrier frequency FR of the received signal RX relative to the reference receiving carrier frequency FRₒ is detected by the PLL 13R and the frequency signal x_{T} of the thus detected offset frequency ΔF' is multiplied by the transmission signal TXₒ, which has the reference transmitting carrier frequency FTₒ, by the multiplier 19, to produce the transmission signal TX which is transmitted with an actual transmitted carrier frequency FT. Thus, the transmission signal TX has an actual transmitted carrier frequency FT with the same transmission offset frequency ΔF' as the reception offset frequency ΔF', and can easily be transmitted with excellent responsiveness.

Similarly, the offset frequency Δ F of the actual received carrier frequency FR of the received signal RX relative to the reference receiving carrier frequency FRₒ is detected by the PLL 13R and the frequency signal x_{R} of the thus detected offset frequency ΔF is provided and then multiplied by the transmission signal RX of the actual received carrier frequency FR by the multiplier 12 to produce the reception signal RXₒ of the reference receiving carrier frequency FRₒ. Thus, even when the actual received carrier frequency FR of the reception signal RX contains the offset frequency ΔF, the audio signal can be demodulated with the same demodulation characteristics as that of a reception signal RXₒ of the reference received carrier frequency FRₒ by the demodulating circuit.

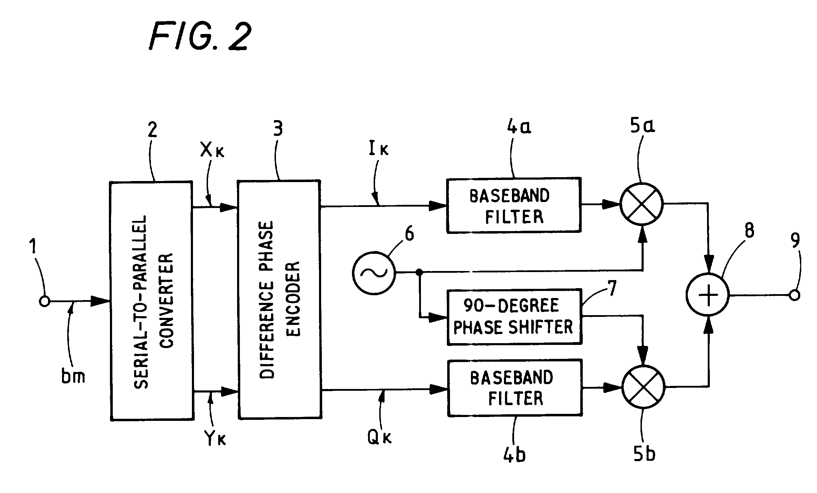

This embodiment uses a π /4 shifted quadrature phase shift keying (QPSK) modulation circuit which is shown in Figure 2. However, the invention is not limited to such a modulating circuit, and can be applied to an analogue or a digital communication system.

As shown in Figure 2, a serial digital audio signal bm from an input terminal 1 is supplied to a serial-to-parallel converter 2, where it is converted to parallel digital signals X_{K} and Y_{K} of two bits and then supplied to a differential phase encoder 3.

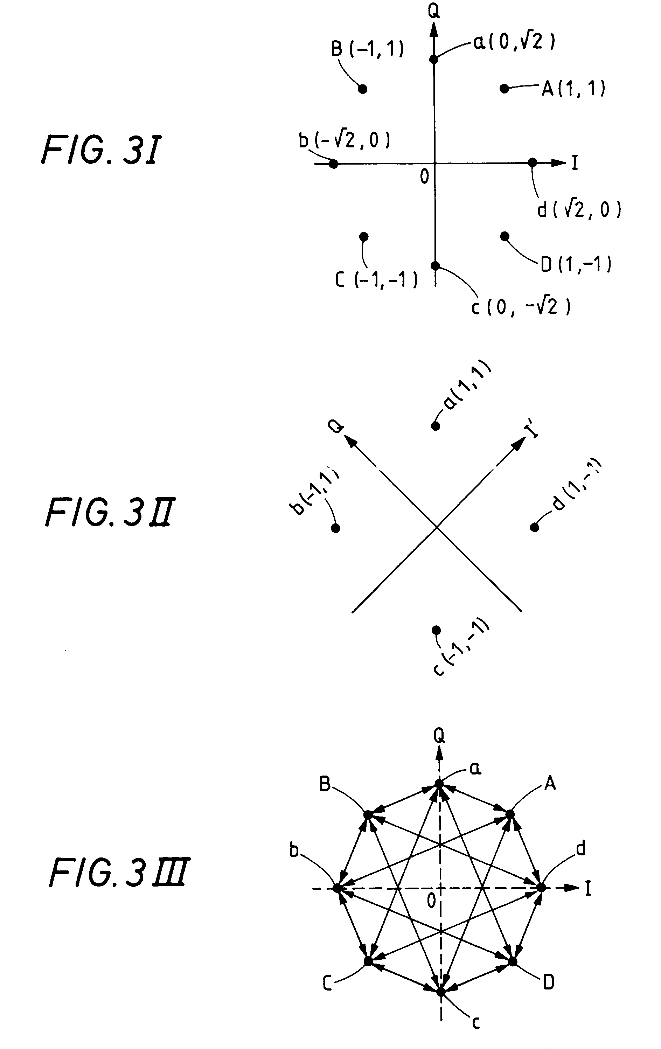

The encoding of the differential phase encoder 3 will be described with reference to Figures 3I to 3III.

As shown in Figure 3I, points A (1, 1), B (-1, 1), C (-1, -1) and D (1, -1) on the perpendicular I axis (real axis and Q axis (imaginary axis) are determined. Then, as shown in Figure 3II, points a (1, 1), b (-1, 1), c (-1, -1) and d (1, -1) on the perpendicular I' axis (real axis) and Q' axis (imaginary axis), which result from rotating the orthogonal I axis and Q axis coordinates by 45 degrees (π/4) are also determined.

When the I' axis and Q' axis coordinates are moved in parallel and superimposed on the I axis and Q axis coordinates so that their origins coincide with each other, the coordinates of the points a, b, c and d on the I' axis and Q' axis coordinates on the I axis and Q axis are presented as a (0, $\sqrt{\text{2}}$), b (-$\sqrt{\text{2}}$, 0), c (0, -$\sqrt{\text{2}}$) and d ($\sqrt{\text{2}}$, 0).

The encoded outputs I_{K} and Q_{K} of the encoder 3 are then moved from any one of the points A to D on the I axis and Q axis coordinates to any one of the points a to d in accordance with the outputs X_{K} and Y_{K} of two bits from the serial-to-parallel converter 2 and moved from any one of the points a to d to any one of the points A to D in response to the outputs X_{K} and Y_{K} of two bits of the serial-to-parallel converter 2. The movements between any one of the points a to d are represented in Figure 3III. Such moves never pass through the origin 0.

The movements between any one of the points A to D on the I axis and Q axis coordinates and any one of the points a to d on the I' axis and Q' axis coordinates can be expressed by the change ΔΦ of the angles of straight lines connecting the respective points and the origin 0.

Accordingly, the relation between the outputs X_{K}, Y_{K} and the difference ΔΦ will be as represented in the following truth table.

| X_{K} | Y_{K} | ΔΦ |
|---|---|---|
| 1 | 1 | -3π/4 |
| 0 | 0 | 3π/4 |
| 0 | 0 | π/4 |
| 1 | 0 | -π/4 |

The encoded outputs I_{K} and Q_{K} are respectively supplied through baseband filters 4 a and 4b to modulators (multipliers) 5a and 5b, where a carrier from a carrier generator 6 and a carrier whose phase is shifted by 90 degrees from the former carrier by a 90 degree phase shifter 7 are modulated (multiplied) with the respective encoded outputs. The outputs are then added by an adder 8 and output from an output terminal 9 as a digital modulated signal.

Thus, in the embodiment described above, the reference receiving carrier frequency and the reference transmitting carrier frequency are different. An offset frequency, which is the difference in the actual received carrier frequency of the received signal relative to the reference received carrier frequency, is detected. The frequency signal of the thus detected offset frequency is multiplied by the transmission signal of the reference transmitting carrier frequency to obtain a transmission signal of an actual transmitted carrier frequency which has an offset frequency relative to the reference transmitting carrier frequency which follows the offset frequency of the received signal. The transmission signal can then easily be transmitted with satisfactory responsiveness.

## Claims

1. A transmitting and receiving apparatus for receiving a signal of an actual received carrier frequency and transmitting a signal of an actual transmitted carrier frequency, the apparatus comprising:
receiving means (11) for receiving a broadcast signal;
the apparatus being characterised by:
reference frequency means (15, 21) for providing a reference receiving carrier frequency and a reference transmitting carrier frequency which are different from each other;
reception offset frequency detecting means (12, 10, 14) for detecting an offset frequency which is the difference between the actual received carrier frequency of the received signal and the reference receiving carrier frequency;
transmission signal generating means (18; 1 to 9) for generating a first transmission signal having the reference transmitting carrier frequency;
multiplying means (19) for multiplying the first transmission signal by the detected offset frequency to generate a second transmission signal with the actual transmitted carrier frequency; and
transmitting means (23) for transmitting the second transmission signal.

2. Apparatus according to claim 1 wherein the reference frequency means (15, 21) comprises means for setting the reference receiving carrier frequency and the reference transmitting carrier frequency in a predetermined relationship.

3. Apparatus according to claim 1 or claim 2 wherein the receiving means (11) further comprises means for receiving a broadcast signal on a time-division basis, and the transmitting means further comprises means for transmitting the second transmission signal on a time-division basis.

4. Apparatus according to claim 1, claim 2 or claim 3 wherein the reception offset frequency detecting means (12, 10, 14) comprises a loop filter (14).

5. Apparatus according to claim 4 wherein the loop filter (14) comprises an integrator (27, 28, 29) such that the output signal of the integrator (27, 28, 29) is the reception offset frequency.

6. Apparatus according to claim 2 further comprising means for modulating the transmission and received signals by a π/4 shifted quadrature phase shift keying.

7. A method of transmitting a signal of an actual transmitted carrier frequency which follows the actual received carrier frequency of a received signal, the method comprising:
receiving (11) a broadcast signal;
the method being characterised by:
providing (15,21) a reference receiving carrier frequency and a reference transmitting carrier frequency which are different from each other;
detecting (12,10,14) an offset frequency which is the difference between the actual received carrier frequency of the received signal and the reference receiving carrier frequency;
generating (18; 1 to 9) a first transmission signal having the reference transmitting carrier frequency;
multiplying (19) the first transmission signal by the detected offset frequency to generate a second transmission signal with the actual transmitted carrier frequency; and
transmitting (23) the second transmission signal.

8. A method according to claim 7 wherein the step of providing (15,21) a reference receiving carrier frequency and a reference transmitting carrier frequency comprises setting the reference receiving carrier frequency and the reference transmitting carrier frequency in a predetermined relationship.

9. A method according to claim 7 or claim 8 wherein the step of receiving (11) a broadcast signal further comprises receiving a broadcast signal on a time-division basis, and the step of transmitting the second transmission signal further comprises transmitting the second transmission signal on a time-division basis.

10. A method according to claim 7, claim 8 or claim 9 wherein the step of detecting (12,10,14) an offset frequency uses a loop filter (14).

11. A method according to claim 10 wherein the loop filter (14) comprises an integrator (27, 28, 29) such that the output signal of the integrator (27, 28, 29) is the reception offset frequency.

12. A method according to claim 8 further comprising modulating the transmission and received signals by a π/4 shifted quadrature phase shift keying.

## Patentansprüche

1. Sende- und Empfangsgerät zum Empfangen eines Signals mit einer empfangenen tatsächlichen Trägerfrequenz und zum Senden eines Signals mit einer gesendeten tatsächlichen Trägerfrequenz, wobei das Gerät
eine Empfangseinrichtung (11) für den Empfang eines Funksignals, aufweist und
**gekennzeichnet ist durch**
eine Referenzfrequenzeinrichtung (15, 21) zum Bereitstellen einer Referenz-Empfangsträgerfrequenz und einer Referenz-Sendeträgerfrequenz, die voneinander abweichen,
eine Empfangsfrequenzversatz-Detektoreinrichtung (12, 10, 14) zum Detektieren eines Frequenzversatzes, der der Differenz zwischen der empfangenen tatsächlichen Trägerfrequenz des empfangenen Signals und der Referenz-Empfangsträgerfrequenz entspricht,
eine Sendesignal-Generatoreinrichtung (18; 1 bis 9) zum Erzeugen eines ersten Sendesignals mit der Referenz-Sendeträgerfrequenz,
eine Multipliziereinrichtung (19) zum Multiplizieren des ersten Sendesignals mit dem detektierten Frequenzversatz und zur Erzeugung eines zweiten Sendesignals mit der gesendeten tatsächlichen Trägerfrequenz und
eine Sendeeinrichtung (23) zum Senden des zweiten Sendesignals.

2. Gerät nach Anspruch 1, bei dem die Referenzfrequenzeinrichtung (15, 21) Mittel aufweist zum Einstellen der Referenz-Empfangsträgerfrequenz und der Referenz-Sendeträgerfrequenz in einer vorbestimmten Relation zueinander.

3. Gerät nach Anspruch 1 oder 2, bei dem Empfangseinrichtung (11) Mittel zum Empfangen eines Funksignals auf einer Zeitmultiplexbasis aufweist und die Sendeeinrichtung Mittel zum Senden des zweiten Sendesignals auf einer Zeitmultiplexbasis aufweist.

4. Gerät nach Anspruch 1, 2 oder 3, bei dem die Empfangsfrequenzversatz-Detektoreinrichtung (12, 10, 14) ein Schleifenfilter (14) enthält.

5. Gerät nach Anspruch 4, bei dem das Schleifenfilter (14) einen Integrator (27, 28, 29) aufweist, so daß das Ausgangssignal des Integrators (27, 28, 29) den Empfangsfrequenzversatz darstellt.

6. Gerät nach Anspruch 2 mit Mitteln zum Modulieren des Sendesignals und des empfangenen Signals mit einer Quadratur-Phasenumtastmodulation mit π/4-Verschiebung.

7. Verfahren zum Senden eines Signals mit einer gesendeten tatsächlichen Trägerfrequenz, die der empfangenen tatsächlichen Trägerfrequenz eines Signals folgt,
wobei das Verfahren
das Empfangen (11) eines Funksignals, umfaßt und
**gekennzeichnet ist durch**
Bereitstellen (15, 21) einer Referenz-Empfangsträgerfrequenz und einer Referenz-Sendeträgerfrequenz, die voneinander abweichen,
Detektieren (12, 10, 14) eines Frequenzversatzes, der der Differenz zwischen der empfangenen tatsächlichen Trägerfrequenz des empfangenen Signals und der Referenz-Empfangsträgerfrequenz entspricht,
Erzeugen (18; 1 bis 9) eines ersten Sendesignals mit der Referenz-Sendeträgerfrequenz,
Multiplizieren (19) des ersten Sendesignals mit dem detektierten Frequenzversatz zum Erzeugen eines zweiten Sendesignals mit der gesendeten tatsächlichen Trägerfrequenz und
Senden (23) des zweiten Sendesignals.

8. Verfahren nach Anspruch 7, bei dem der Verfahrensschritt des Bereitstellens (15, 21) einer Referenz-Empfangsträgerfrequenz und einer Referenz-Sendeträgerfrequenz das Einstellen der Referenz-Empfangsträgerfrequenz und der Referenz-Sendeträgerfrequenz in einer vorbestimmten Relation zueinander beinhaltet.

9. Verfahren nach Anspruch 7 oder 8, bei dem der Verfahrensschritt des Empfangens eines (11) Funksignals ferner das Empfangen eines Funksignals auf einer Zeitmultiplexbasis beinhaltet und der Verfahrensschritt des Sendens des zweiten Sendesignals ferner das Senden des zweiten Sendesignals auf einer Zeitmultiplexbasis beinhaltet.

10. Verfahren nach Anspruch 7, 8 oder 9, bei dem der Verfahrensschritt des Detektierens (12, 10, 14) eines Frequenzversatzes ein Schleifenfilter (14) benutzt.

11. Verfahren nach Anspruch 8, bei dem das Schleifenfilter (14) einen Integrator (27, 28, 29) aufweist, so daß das Ausgangssignal des Integrators (27, 28, 29) den Empfangsfrequenzversatz darstellt.

12. Verfahren nach Anspruch 8, bei dem das Sendesignal und das empfangene Signal mit einer Quadratur-Phasenumtastmodulation mit π/4-Verschiebung moduliert werden.

## Revendications

1. Un appareil d'émission et de réception pour recevoir un signal d'une fréquence porteuse reçue réelle et pour émettre un signal d'une fréquence porteuse émise réelle, l'appareil comprenant :
des moyens de réception (11) pour recevoir un signal diffusé;
l'appareil étant caractérisé par
des moyens de génération de fréquences de référence (15, 21) pour produire une fréquence porteuse de réception de référence et une fréquence porteuse d'émission de référence qui sont mutuellement différentes;
des moyens de détection de fréquence de décalage de réception (12, 10, 14) pour détecter une fréquence de décalage qui est la différence entre la fréquence porteuse reçue réelle du signal reçu et la fréquence porteuse de réception de référence;
des moyens de génération de signal d'émission (18; 1 à 9) pour générer un premier signal d'émission ayant la fréquence porteuse d'émission de référence,
des moyens de multiplication (19) pour multiplier le premier signal d'émission par la fréquence de décalage détectée, de façon à générer un second signal d'émission avec la fréquence porteuse émise réelle; et
des moyens d'émission (23) pour émettre le second signal d'émission.

2. Appareil selon la revendication 1, dans lequel les moyens de génération de fréquences de référence (15, 21) comprennent des moyens pour fixer la fréquence porteuse de réception de référence et la fréquence porteuse d'émission de référence conformément à une relation prédéterminée.

3. Appareil selon la revendication 1 ou la revendication 2, dans lequel les moyens de réception (11) comprennent en outre des moyens pour recevoir un signal diffusé en multiplex par répartition dans le temps, et les moyens d'émission comprennent en outre des moyens pour émettre le second signal d'émission en multiplex par répartition dans le temps.

4. Appareil selon la revendication 1, la revendication 2 ou la revendication 3, dans lequel les moyens de détection de fréquence de décalage de réception (12, 10, 14) comprennent un filtre de boucle (14).

5. Appareil selon la revendication 4, dans lequel le filtre de boucle (14) comprend un intégrateur (27, 28, 29), de façon que le signal de sortie de l'intégrateur (27, 28, 29) soit la fréquence de décalage de réception.

6. Appareil selon la revendication 2, comprenant en outre des moyens pour moduler les signaux d'émission et de réception par un déplacement de phase en quadrature avec déphasage de π/4.

7. Un procédé d'émission d'un signal d'une fréquence porteuse émise réelle qui suit la fréquence porteuse reçue réelle d'un signal reçu, le procédé comprenant :
la réception (11) d'un signal diffusé;
le procédé étant caractérisé par :
la génération (15, 21) d'une fréquence porteuse de réception de référence et d'une fréquence porteuse d'émission de référence qui sont mutuellement différentes;
la détection (12, 10, 14) d'une fréquence de décalage qui est la différence entre la fréquence porteuse reçue réelle du signal reçu et la fréquence porteuse de réception de référence,
la génération (18; 1 à 9) d'un premier signal d'émission ayant la fréquence porteuse d'émission de référence;
la multiplication (19) du premier signal d'émission par la fréquence de décalage détectée, pour générer un second signal d'émission avec la fréquence porteuse émise réelle; et
l'émission (23) du second signal d'émission.

8. Un procédé selon la revendication 7, dans lequel l'étape de génération (15, 21) d'une fréquence porteuse de réception de référence et d'une fréquence porteuse d'émission de référence comprend la fixation de la fréquence porteuse de réception de référence et de la fréquence porteuse d'émission de référence conformément à une relation prédéterminée.

9. Un procédé selon la revendication 7 ou la revendication 8, dans lequel l'étape de réception (11) d'un signal diffusé comprend en outre la réception d'un signal diffusé en multiplex par répartition dans le temps, et l'étape d'émission du second signal d'émission comprend en outre l'émission du second signal d'émission en multiplex par répartition dans le temps.

10. Un procédé selon la revendication 7, la revendication 8 ou la revendication 9, dans lequel l'étape de détection (12, 10, 14) d'une fréquence de décalage utilise un filtre de boucle (14).

11. Un procédé selon la revendication 10, dans lequel le filtre de boucle (14) comprend un intégrateur (27, 28, 29), de façon que le signal de sortie de l'intégrateur (27, 28, 29) soit la fréquence de décalage de réception.

12. Un procédé selon la revendication 8, comprenant en outre la modulation du signal d'émission et du signal reçu par un déplacement de phase en quadrature avec déphasage de π/4.
